# EUROPEAN PATENT SPECIFICATION

(11) **EP 0 341 747 B1**
(45) Date of publication and mention of the grant of the patent: **01.09.1993**
(21) Application number: 89108634.0
(22) Date of filing: 12.05.1989
(51) Int. Cl.: B29D 11/00, B29C 41/04

(54) **Method for the polymerization rotation casting of lenses and equipment for performing this method**
Verfahren zur Polymerisation von Linsen durch Rotationsgiessen und Vorrichtung zu dessen Durchführung
Procédé pour la polymérisation de lentilles pendant le coulage par rotation et dispositif pour la mise en oeuvre

(30) Priority: 13.05.1988 CS 3255/88
(43) Date of publication of application: 15.11.1989
(73) Proprietor: Ceskoslovenska akademie ved, Praha 1 (CS)
(72) Inventor: Sulc, Jiri, Ing., Praha 4 (CS); Krcova, Zuzana, Praha 7 (CS)
(74) Representative: Beetz & Partner Patentanwälte

(56) References cited:
- EP-A- 0 165 358
- DE-A- 3 218 766
- FR-A- 2 028 738
- FR-A- 2 546 442
- FR-A- 2 558 766
- US-A- 4 422 984
- SOVIET INVENTIONS ILLUSTRATED, week K/15, 25th May 1983, class A96, Derwent Publications Ltd, London, GB; & SU-A-952 958 (Medoborudovanie Sci. Prod. (LVPO) 23-06-1980

## Description

The invention relates to a method for polymerization rotation casting of lenses of the kind referred to in the preamble portion of patent claim 1 and to an equipment for carrying out this method according to claim 7. Such a method is known from FR-A-1028738.

It is known that lenses can be manufactured from organic polymers in such a way that a precisely measured dose of an initiated monomer mixture is allowed to polymerize in a concave part of a rotating mold, while the shape of the concave face of lens is formed, on the one hand, by rotation giving a paraboloidal shape to the concave side of lens, and, on the other hand, by surface tension which modifies this shape. The periphery of lens is demarcated by a sharp edge at which the liquid monomer mixture, forced to the periphery by centrifugal force, stops due to the surface tension. If such a sharp edge is not used, the periphery of the lens is very thin but mostly non-uniform. Also when the sharp edge is used, the periphery of the lens has on the side adhering to the eye the shape of a meniscus due to the interaction of surface tensions and therefore the range within which the shape can be varied is very limited. For this reason, it must be often modified by additional processing, for example, by turning, polishing, and the like. This procedure is protected by several patents, for example, CS-C-159,359; CS-C-237,592 and CS-C-256,889.

It is also known that lenses can be cast from a polymerizing monomer mixture on the level of rotating liquid, which is immiscible with the monomer mixture and which has a higher specific weight than the monomer mixture and the resulting polymer, or that the polymerization casting can be carried out between two liquids immiscible with the monomer mixture while one of the liquids has a higher specific weight and the other a lower specific weight than the monomer mixture (CS-C-147,046 corresponding to FR-A-2028738, and CS-C-172,761).

FR-A-2028738 discloses a method for the polymerization rotation casting of lenses containing a convex and concave surface in molds being placed in a rotation mechanism, where the convex surface of the lens is formed by rotation of a liquid having a higher specific weight than that of a monomer mixture and is immiscible with said monomer mixture and also with its individual components.

It is the object of the present invention to present a new method and equipment for the polymerization rotation casting of lenses to avoid the above mentioned drawbacks of the prior art.

This object is accomplished with a method and an equipment as claimed.

Dependent claims are directed on features of preferred embodiments of the invention.

The procedure according to the invention has the advantage that the concave side of a lens adhering to the eye may be furnished with an arbitrary shape, for example, by creating radial or oblique channels allowing the exchange of tears in the space between the lens and cornea and thus supplying the cornea with oxygen or by formation of aspherical, for example, elliptic toric surfaces.

The periphery of the lens on the side adhering to the eye has also the shape of mold so that it need not be additionally modified.

Till the lens adheres to the convex part of the mold, its outer (convex) side may be modified above all in the dry state as xerogel, for example, by turning or polishing. After swelling, the lens may be very easily separated from the mold. The procedure may be used for casting in a both-sidedly open mold. The application of inert gas can be omitted at all because the polymerizing mixture is perfectly separated from the atmosphere by an auxiliary liquid with a higher specific weight. The high surface tension of auxiliary liquids with a higher specific weight, for example, a concentrated salt solution, causes a sharp curvature of the menisci.

The method for polymerization rotation casting of lenses according to the invention may be carried out both in a column arrangement of molds and in individual molds.

An equipment for performing the method according to the invention in the column arrangement consists of a calibrated tube closed at the lower end and furnished with a one-way valve for the inlet of liquid with a higher specific weight, in which the molds provided with channels connecting the spaces above and below the bottom of mold are arranged in a column, whereas the calibrated tube, which is carried above and below in ball bearings, passes at its upper end through a pulley for vertical rotation and is carried in the horizontal direction by a revolving pivot for turning the tube around the horizontal axis and for tilting the tube from the vertical direction during rotation.

For the individual performance of polymerization, the casting is carried out in the individual rotating molds placed, for example, in a carrousel and dipped into an auxiliary liquid.

The equipment for performing this method consists of a mold on the convex side of which is set a cap filled with a liquid having a higher specific weight and provided with a puncture closure for dosing of monomer mixture, whereas the mold is set on the revolving pivot.

The initiated monomer mixture can be introduced into the mold in several ways, while spreading of the monomer mixture on the downwards turned convex surface is controlled by revolutions during rotation. At higher rotation speeds, usually above 800 r.p.m. (depending on the difference of specific weights of both liquids), the monomer mixture is kept in the axis of rotation as a droplet surrounded from all sides with the auxiliary liquied having a higher specific weight, while at the rotation speed lowered to the value depending on the required final shape, the monomer mixture easily flowing in the beginning is spread over the whole convex surface of mold as far as to the sharp edge. Besides the rotation speed, the optical power of the lens may be controlled also by tilting the rotating mold from the vertical axis.

In order to carry out the method according to the invention, the monomer mixture is dosed into each mold before its insertion into the calibrated tube, after insertion of the last mold, the whole tube is filled under rotation with the auxiliary liquid having a higher specific weight than has the monomer mixture.

Another possibility consists in dosing the monomer mixture below the mold turned upwards with its convex side, inserted into the calibrated tube, and immersed in the auxiliary liquid, where the tube after complete filling and closing is allowed to rotate at higher speed, then turned by 180° around the center, the rotation speed is lowered, and the monomer mixture is polymerized.

The procedure may be also modified in such a way, that the dosed droplet of monomer mixture is allowed to freeze on the convex surface of mold, the molds are inserted into the calibrated tube provided with a seal on its lower end and with a channel for inlet of auxiliary liquid, the remaining space of the tube is then filled from below with the auxiliary liquid having a higher specific weight and sealed, the molds are heated under rotation to melt the frozen droplets of monomer mixture, spread it on the downwards turned convex surface of the molds, and polymerize it under rotation.

The way of filling the molds with monomer mixture for casting in rotating separate molds placed in a carrousel and immersed in the auxiliary liquid consists, for example, in dosing the monomer mixture below the center of single molds rotating in an auxiliary liquid.

The surface of the convex part of mold is modified by discharge or chemically in the way to be wettable with the monomer mixture, while the other parts are not wetted with the monomer mixture.

The following specifically heavier auxiliary liquids can be used: mercury, low-melting metal alloys, saturated solutions of some salts, as potassium carbonate, sodium sulfate, sodium hydrogenphosphate, and the like (K₂CO₃, Na₂SO₄, Na₂HPO₄) or their low-melting hydrates. As casting mixtures there may be used initiated monomer mixtures with or without solvents immiscible with the auxiliary liquid or directly the solutions of polymers which can be crosslinked or are thermoreversible, for example, gelatine, collagen, and the like.

It is obvious that, instead of chemical initiators, the polymerization may be initiated also by radiation with a suitable wavelength, for example, UV radiation, provided that the material of molds and tube transmits this radiation in a sufficient extent. Such materials are fused silica and some plastics. For the polymerization in a column, the molds are provided with channels between separate spaces, so that air cannot remain in any space during filling from below.

The invention is explained in details in the following with reference to the appended drawings which diagrammatically show examples of some functionally important parts of the equipment.
Fig. 1 shows a column arrangement of an equipment for casting on the convex surface of mold in an axial section;
Figs. 2 and 6 show longitudinal sections of casting molds;
Figs. 3 and 5 are plan views of the casting molds; and
Fig. 4 is a sectional view of a mold arrangement; an axial section of the arrangement of molds with dosed monomer mixture is shown in Figs. 7 and 8;
Fig. 9 shows the equipment for casting in single and separately mounted molds, for example, in a carrousel, in a longitudinal section;
Fig. 10 shows a longitudinal section of the part of calibrated tube with dosing of the monomer mixture.

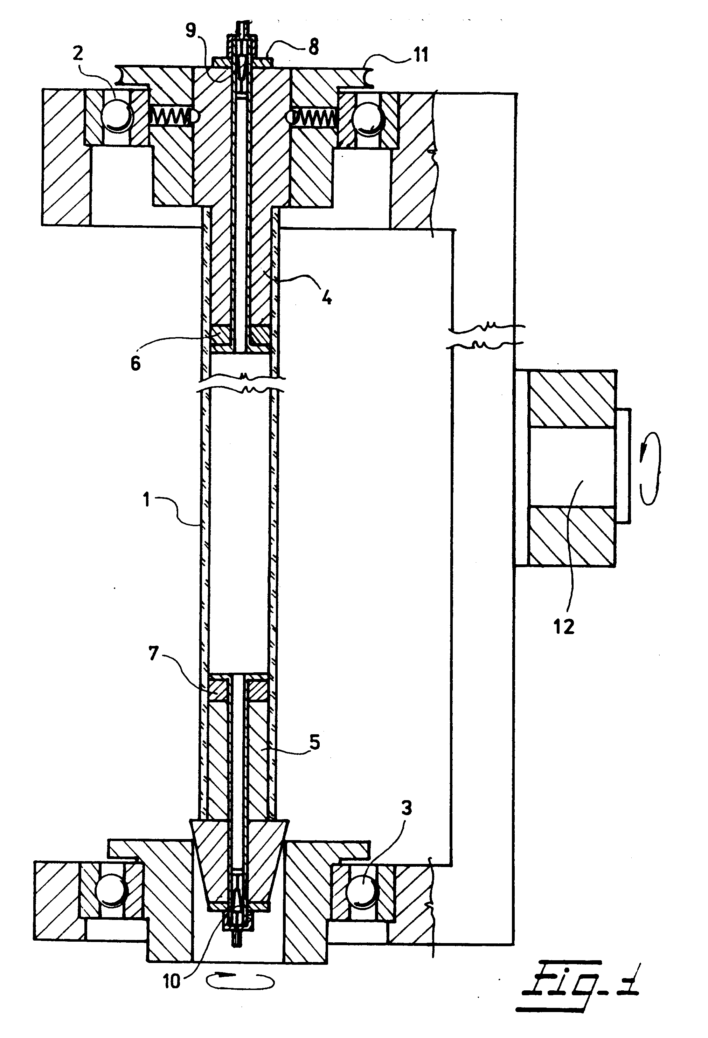

The equipment shown in the axial section in Fig. 1 consists of a calibrated tube 1 which is carried at both ends in ball bearings 2, 3, provided with closures 4, 5 sealed with elastic distance rings 6, 7. The closures 4, 5 are provided with valves 9, 10 and the calibrated tube 1 passes at its upper end through a pulley 11, by means of which the tube is vertically rotated.

The calibrated tube 1 is fixed in a revolving pivot 12 for rotation of the calibrated tube 1 around the horizontal axis or for obtaining tilting of the calibrated tube 1 from the vertical direction.

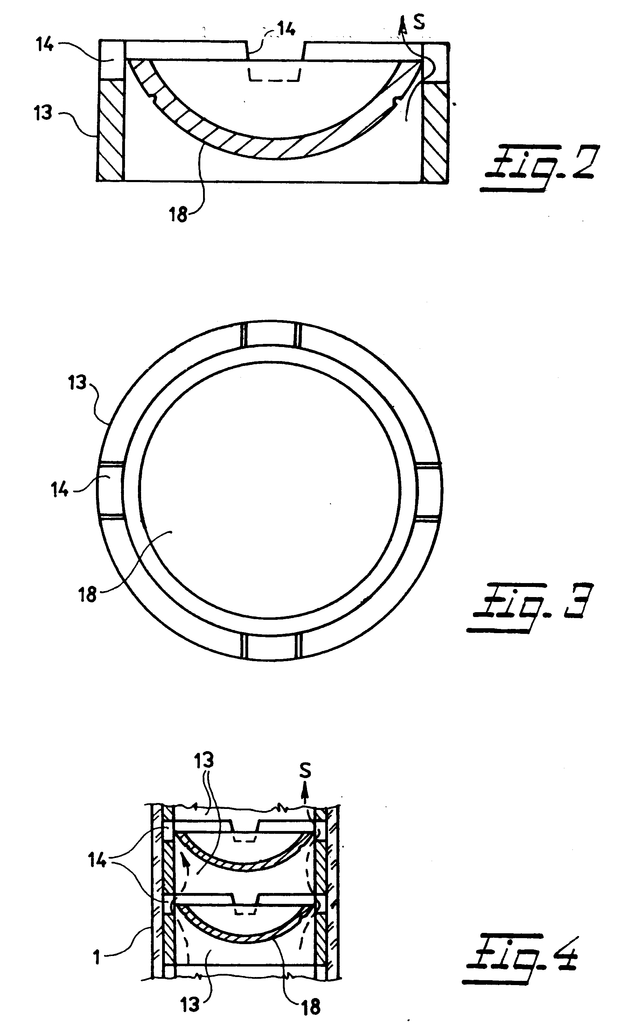

Fig. 2 shows the casting mold 13 equipped with channels 14, which mold is also shown in Fig. 3 in a plan view.

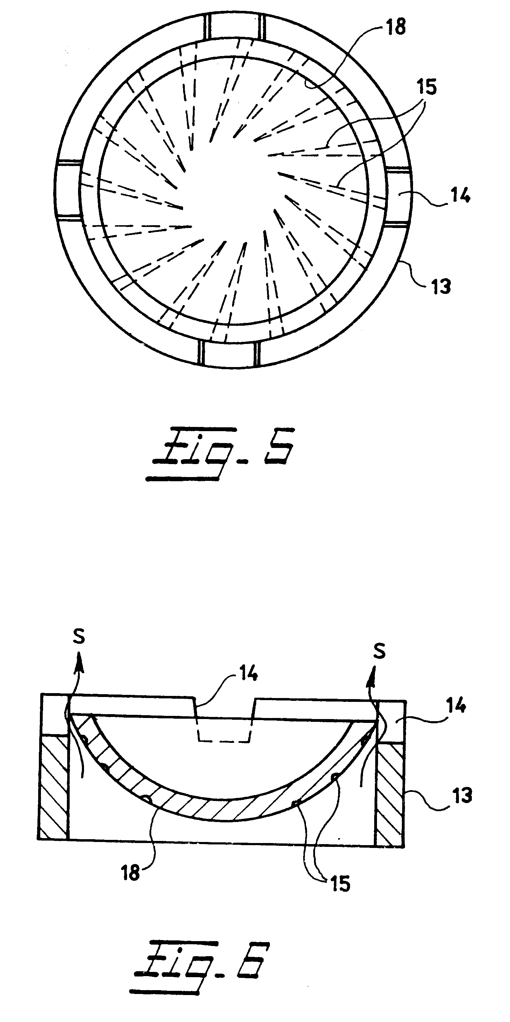

Fig. 4 shows the arrangement of molds 13 provided with channels 14 in an axial view and the flow direction of auxiliary liquid S.

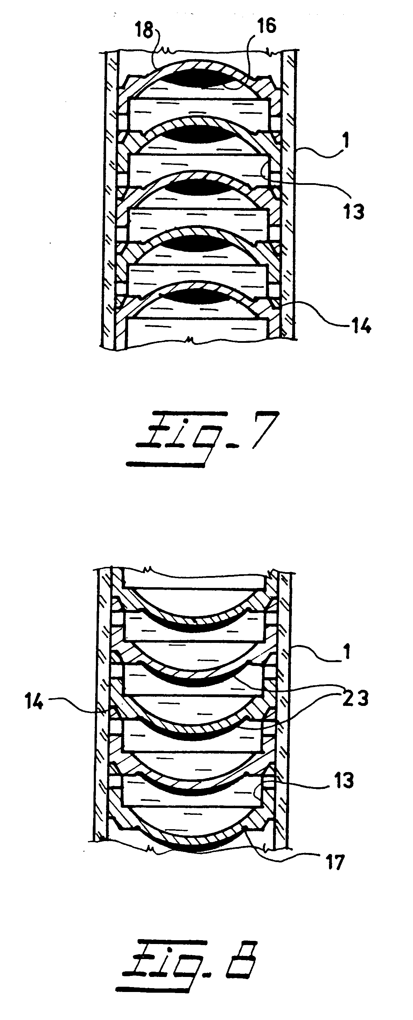

A plan view of the mold 13, the convex surface 18 of which is provided with channels 15 is shown in Fig. 5, whereas Fig. 6 shows a longitudinal section through this mold.

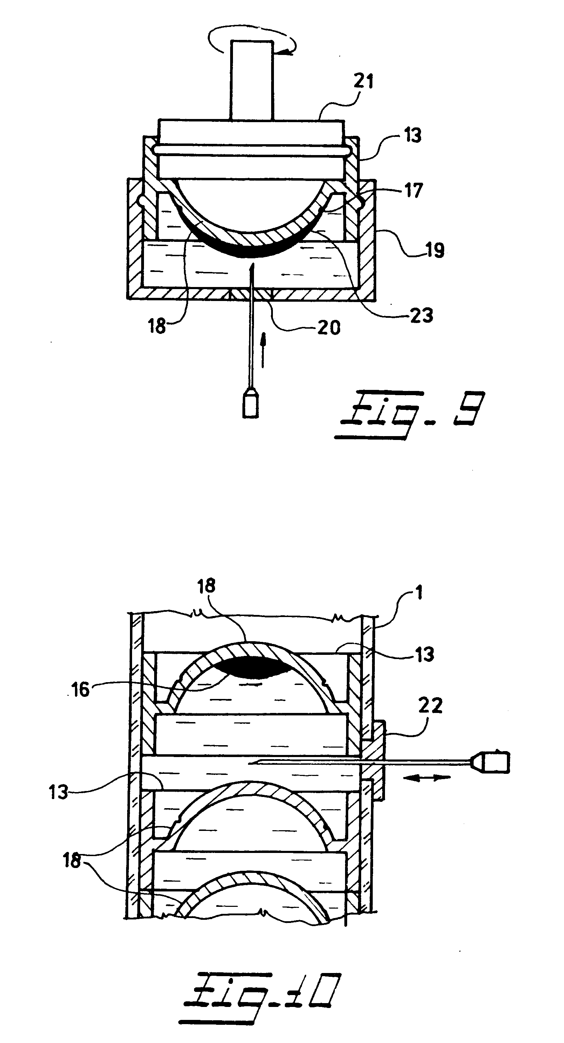

The arrangement of molds 13 with the surface turned upwards is shown in an axial section in Fig. 7 (the tube 1 is turned with the bottom upwards) at dosing of a monomer mixture 16.

Fig. 8 shows the arrangement of molds 13 after turning the tube 1 by 180° around the horizontal axis at casting of lenses. The lens 23 having the optimal periphery 17 is formed in the convex part of mold 13 in this arrangement.

The equipment for casting in single separately mounted mold, for example, in a carrousel, is shown in Fig. 9 and consists of the mold 13 fitted on its convex side 18 with a cap 19 provided with a puncture closure 20 for dosing of a monomer, which mold 13 is mounted on a rotary pin 21.

Fig. 10 shows a longitudinal section of a part of the calibrated tube 1 with the molds 13 placed by the convex surface 18 upwards, where the calibrated tube 1 is provided with a hole 22 for a dosing needle.

The invention is further illustrated by the description of embodiments without limiting the scope of the invention.

### Example 1

The cap 19 provided in the lower center with the puncture closure 20 and filled with a concentrated solution of sodium hydrogenphosphate (Na₂HPO₄) is set on the polystyrene mold turned with its convex part 18 downwards (Fig. 9). The mold 13 is then slided on the revolving pin 21 which is rotated to 1000 r.p.m. Under rotation, 40 mg of acetyl ethylene glycol methacrylate containing 0.01 % of benzoin methyl ether and 0.3 % of ethylene dimethacrylate (EDMA) is then dosed with a needle through the puncture closure 20, the rotation speed is lowered to 350-550 r.p.m. according to the desired optical power of lens, and the mold is then irradiated with a light of high-pressure mercury lamp. After 15 minutes, the mold 13 with the polymerized lens is washed in 1 N sulfuric acid (H₂SO₄) where the acetyl group is hydrolyzed and the lens swells.

### Example 2

The monomer mixture (50 mg) containing 2-hydroxyethyl methacrylate with 0.05 % benzoin methyl ether is dosed into downwards turned polypropylene molds 13 placed in the vertical calibrated tube 1 (Fig. 1 and 10) filled with the concentrated solution of potassium carbonate (K₂CO₃) in water. The molds 13 are after one another shifted through the calibrated tube 1 into which is inserted a dosing needle from side through the opening 22. After dosing, the calibrated tube 1 is rotated to about 1200 r.p.m. and then turned by 180°. The rotation speed is lowered to 350-500 r.p.m. according to the required optical power of lenses and the calibrated tube 1 is irradiated with UV light of wave length 350 nm. The molds 13 with polymerized lenses are then washed in distilled water 60 °C warm and there are also removed by deswelling.

### Example 3

The polymerization solution (45 mg) consisting of 80 % of 2-hydroxyethyl methacrylate, 20 % of glycerol, and 0.1 % of isopropyl peroxocarbonate is applied on the top of the polystyrene mold 13 the convex surface of which is hydrophilized by discharge. The molds 13 are placed in the vertical calibrated tube 1 through which dry nitrogen with temperature -30 °C is allowed to flow. The droplets of monomer mixture solidify, the calibrated tube is filled with an undercooled saturated solution of sodium sulfate (Na₂SO₄) and rotated at 450 r.p.m. The column is then heated to 40 °C until the mixture polymerizes. The molds with lenses are then washed in warm water until they deswell (Fig. 1).

## Claims

1. Method for the polymerization rotation casting of lenses containing a convex and concave surface in molds being placed in a rotation mechanism, where the convex surface of the lens is formed by rotation of a liquid having a higher specific weight than that of a monomer mixture and is immiscible with said monomer mixture and also with its individual components, characterized in that the concave surface of the lens is formed by a convex surface of the mold while the remaining space of said mold is filled with said liquid having a higher specific weight.

2. The method for the polymerization rotation casting of lenses according to claim 1, characterized in that the monomer mixture is dosed into each mold before its insertion into the rotation mechanism which is a calibrated tube and the whole calibrated tube is after insertion of the last mold and under rotation filled with the liquid having a higher specific weight than has the monomer mixture.

3. The method for the polymerization casting of lenses according to claim 1, characterized in that the measured droplet of monomer mixture is allowed to freeze on the convex surface of mold, the mold is inserted into the calibrated tube the remaining space of the whole calibrated tube is then filled with this liquid introduced from below, the calibrated tube is closed and the molds are heated under rotation the frozen droplet of monomer mixture melts, spreads on the downwards turned convex side of the mold, and polymerizes under rotation.

4. The method for the rotation casting of lenses according to claim 1, characterized in that the monomer mixture is dosed under molds turned with their convex part upwards, inserted into the calibrated tube, and immersed in the specifically heavier liquid, the whole calibrated tube is filled, closed, and allowed to rotate at an elevated rotation speed, then turned by 180° around its center, the rotation speed is lowered, and the monomer mixture is polymerized.

5. The method for the rotation casting of lenses according to claim 1, characterized in that the monomer mixture is dosed under the centers of individual molds rotating in the specifically heavier liquid.

6. The method according to claims 1 to 4, characterized in that the dioptric value of the lenses is controlled by tilting the rotation axis from the vertical direction.

7. Equipment for performing the method according to claims 1 to 4 in a column arrangement, characterized by comprising a calibrated tube (1) closed at the lower end with a one-way valve (10) for the inlet of specifically heavier liquid, in which the molds (13) provided with channels (14) connecting the spaces above and below the mold bottom are arranged in a column, whereas the calibrated tube (1) passes in the upper part through a pulley (11) for vertical rotation and is placed in the horizontal direction in a rotary pivot (12) for turning the calibrated tube (1) around its horizontal axes and tilting of the calibrated tube (1) from the vertical direction during rotation.

8. The equipment according to claim 7, characterized by further comprising a mold (13) on the convex side of which (18) is set a cap (19) filled with the specifically heavier liquid and provided with a puncture closure (20) for dosing of the monomer mixture, whereas the mold (13) is mounted on a rotary pin (21).

9. The equipment according to claims 7 and 8, characterized in that the convex side (18) of the mold (13) is wettable with the cast mixture.

## Patentansprüche

1. Verfahren zur Polymerisation von Linsen mit einer konvexen und einer konkaven Oberfläche durch Rotationsgießen in Gußformen, welche in einen Rotationsmechanismus eingesetzt werden, bei dem die konvexe Oberfläche der Linse durch Rotation einer Flüssigkeit gebildet wird, deren spezifisches Gewicht höher als das der Monomermischung ist, und die mit diesem Monomergemisch sowie seinen einzelnen Bestandteilen nicht mischbar ist,
**dadurch gekennzeichnet,**
daß die konkave Oberfläche der Linse durch eine konvexe Oberfläche der Gußform geformt wird, während der restliche Raum der Gußform mit der Flüssigkeit mit dem höheren spezifischen Gewicht gefüllt ist.

2. Verfahren nach Anspruch 1,
dadurch gekennzeichnet,
daß das Monomergemisch in jede Gußform dosiert wird, bevor diese in den Rotationsmechanismus eingesetzt wird, der aus einem Kalibrierrohr besteht und daß nach dem Einsetzen der letzten Gußform das gesamte kalibrierte Rohr unter Rotation mit der Flüssigkeit, deren spezifisches Gewicht größer als das der Monomermischung ist, gefüllt wird.

3. Verfahren nach Anspruch 1,
dadurch gekennzeichnet,
daß der bemessene Tropfen Monomermischung auf der konvexen Oberfläche der Form eingefroren wird, die Form in das kalibrierte Rohr eingeführt wird, dessen restlicher Innenraum dann mit der Flüssigkeit von unten gefüllt wird, daß das Rohr geschlossen wird und die Formen unter Rotation geheizt werden, und daß das Gemisch schmilzt, sich auf der nach unten gerichteten konvexen Seite der Gußform verteilt und unter Rotation polymerisiert.

4. Verfahren nach Anspruch 1,
dadurch gekennzeichnet,
daß die Monomermischung unter mit ihrem konvexen Teil nach oben gewandten Gußformen dosiert wird, die in das kalibrierte Rohr eingefügt und in die spezifisch schwerere Flüssigkeit eingetaucht sind, daß das ganze kalibrierte Rohr gefüllt, geschlossen und bei einer hohen Rotationsgeschwindigkeit rotiert wird, anschließend um 180° um seinen Mittelpunkt gedreht wird, daß die Rotationsgeschwindigkeit gesenkt wird und das Monomergemisch polymerisiert wird.

5. Verfahren nach Anspruch 1,
dadurch gekennzeichnet,
daß die Monomermischung unter die Mittelpunkte einzelner Gußformen dosiert wird, die in der spezifisch schwereren Flüssigkeit rotieren.

6. Verfahren nach einem der Ansprüche 1 bis 4,
dadurch gekennzeichnet,
daß die Dioptrienzahl der Linsen durch Auslenken der Rotationsachse aus der Vertikalen gesteuert wird.

7. Vorrichtung zur Durchführung des Verfahrens nach einem der Ansprüche 1 bis 4 in einer Säulenanordnung,
gekennzeichnet durch
ein am unteren Ende mit einem Einwegventil (10) zum Einlassen von spezifisch schwererer Flüssigkeit verschlossenes kalibriertes Rohr (1), in dem die Gußformen (13), die mit die Räume oberhalb und unterhalb des Gußformbodens verbindenden Kanälen (14) versehen sind, in Form einer Säule angeordnet sind, wobei das kalibrierte Rohr (1) im oberen Teil durch eine Riemenscheibe (11) für die vertikale Rotation verläuft und in horizontaler Richtung in einem Drehgelenk (12) zum Drehen des kalibrierten Rohrs (1) um seine horizontale Achse und zum Auslenken des kalibrierten Rohrs (1) aus der vertikalen Richtung während der Rotation angebracht ist.

8. Vorrichtung nach Anspruch 7,
gekennzeichnet durch
eine Gußform (13), auf deren konvexer Seite (18) eine Kappe (19) angebracht ist, die mit der spezifisch schwereren Flüssigkeit gefüllt ist und mit einem Einstichverschluß (20) zum Dosieren des Monomergemischs versehen ist, welche Gußform (13) auf einem rotierenden Stift (21) montiert ist.

9. Vorrichtung nach Anspruch 7 oder 8,
dadurch gekennzeichnet,
daß die konvexe Seite (18) der Gußform (13) mit dem Gießgemisch benetzbar ist.

## Revendications

1. Procédé de moulage par polymérisation en rotation de lentilles comprenant une surface convexe et une surface concave dans un moule respectif disposé dans un mécanisme en rotation, ladite surface convexe de chacune desdites lentilles étant formée par la rotation d'un liquide ayant une densité supérieure à celle d'un mélange de monomères, ledit liquide étant immiscible avec ledit mélange de monomères ainsi qu'avec chacun des constituants élémentaires de ce dernier, ledit procédé étant caractérisé en ce que ladite surface concave de chacune desdites lentilles est formée par une surface convexe dudit moule respectif tandis que l'espace restant dudit moule est rempli par ledit liquide de densité supérieure.

2. Procédé de moulage par polymérisation en rotation de lentilles selon la revendication 1, caractérisé en ce que le mélange de monomères est dosé dans chaque moule avant son introduction dans le mécanisme en rotation qui est un tube calibré, et ledit tube calibré tout entier, après introduction du dernier moule et mise en rotation, est rempli avec ledit liquide de densité supérieure à celle dudit mélange de monomères.

3. Procédé de moulage par polymérisation en rotation de lentilles selon la revendication 1, caractérisé en ce que il est permis à la dose de mélange de monomères de geler sur la surface convexe du moule, le moule est introduit dans le tube calibré, l'espace restant du tube calibré tout entier est ensuite rempli par le bas avec le liquide, le tube calibré est fermé, et les moules sont chauffés en rotation, la dose gelée de mélange de monomères fond, s'étend sur la partie convexe tournée vers le bas du moule respectif et polymérise en rotation.

4. Procédé de moulage par rotation de lentilles selon la revendication 1, caractérisé en ce que le mélange de monomères est dosé sous les moules dont la partie convexe est tournée vers le haut, lesdits moules étant introduits dans le tube calibré et immergés dans le liquide plus dense, le tube calibré tout entier est rempli, fermé et mis en rotation à une vitesse de rotation élevée, tourné de 180° autour de son centre, la vitesse de rotation est réduite, et le mélange de monomères est polymérisé.

5. Procédé de moulage par rotation de lentilles selon la revendication 1, caractérisé en ce que le mélange de monomères est dosé sous les centres respectifs de moules individuels en rotation dans le liquide plus dense.

6. Procédé selon les revendications 1 à 4, caractérisé en ce que la valeur dioptrique des lentilles est déterminée par l'inclinaison par rapport à la verticale de l'axe de rotation.

7. Dispositif permettant la mise en oeuvre du procédé selon les revendications 1 à 4 dans une disposition en colonne, caractérisé en ce que ledit dispositif comprend un tube calibré (1) dont l'extrémité inférieure est fermée par une valve unidirectionnelle (10) pour l'admission de liquide de plus grande densité, dans lequel les moules (13), munis chacun de canaux (14) mettant en communication les espaces se trouvant en dessus et en dessous du fond du moule, sont disposés en une colonne, tandis que ledit tube calibré est en prise par son extrémité supérieure avec une poulie (11) d'entraînement en rotation autour de son axe vertical et est installé dans un pivot (12) de commande de la rotation autour de son axe horizontal servant à retourner le tube calibré (1) autour de son axe horizontal ainsi qu'à incliner le tube calibré (1) relativement à la direction verticale pendant la rotation.

8. Dispositif selon la revendication 7, caractérisé en ce qu'il comprend en outre un moule (13) sur le côté convexe (18) duquel est ajusté un couvercle (19) rempli du liquide plus dense et muni d'un bouchon (20) autoscellant permettant de doser le mélange de monomères, tandis que le moule est porté par une tige (21) en rotation.

9. Dispositif selon les revendications 7 et 8, caractérisé en ce que la partie convexe (18) du moule (13) est mouillable par le mélange de moulage.
